Europäisches Patentamt

European Patent Office

Office européen des brevets

(11) Veröffentlichungsnummer: **0 155 472**
**B1**

(12) **EUROPÄISCHE PATENTSCHRIFT**

(45) Veröffentlichungstag der Patentschrift:
03.05.89

(51) Int. Cl.⁴: **G 05 D 13/62,** H 02 P 7/00,
D 01 H 13/32

(21) Anmeldenummer: 85100961.3

(22) Anmeldetag: 31.01.85

(54) Antriebssteuerung für elektrische Maschinen.

(30) Priorität: 12.03.84 CH 1215/84

(43) Veröffentlichungstag der Anmeldung:
25.09.85 Patentblatt 85/39

(45) Bekanntmachung des Hinweises auf die Patenterteilung:
03.05.89 Patentblatt 89/18

(84) Benannte Vertragsstaaten:
CH DE FR GB LI

(56) Entgegenhaltungen:
EP-A- 0 026 110
DE-B- 1 271 815
GB-A- 2 109 020

PATENTS ABSTRACTS OF JAPAN, Band 7, Nr. 239, 25.
Oktober 1983, Seite 48 E 206; & JP - A - 58 127 598
(MEIDENSHA K.K.) 29.07.1983
PATENTS ABSTRACTS OF JAPAN, Band 5, Nr. 74, 16.
Mai 1981, Seite 56 E 57; & JP - A - 56 22 592 (MITSUBISHI
DENKI K.K.) 03.03.1981

(73) Patentinhaber: BBC Brown Boveri AG, Haselstrasse,
CH-5401 Baden (CH)

(72) Erfinder: Mertl, Wenzel, Usterstrasse 80,
CH-8600 Dübendorf (CH)
Erfinder: Ouwehand, Peter, Pfaffenzielstrasse 3b,
CH-5300 Ennetturgi (CH)
Erfinder: Seiffert, Harry, Hägelerstrasse 75,
CH-5400 Baden (CH)

ACTORUM AG

# Beschreibung

Bei der Erfindung wird ausgegangen von einem Verfahren zum Antrieb von mehreren elektrischen Maschinen, insbesondere von Offen-End-Spinnmaschinen, nach dem Oberbegriff des Patentanspruchs 1.

Mit diesem Oberbegriff nimmt die Erfindung auf einen Stand der Technik zum Antrieb von mehreren elektrischen Maschinen Bezug, wie er z.B. aus der Druckschrift Siemens Aktiengesellschaft, Bestell-Nr. E-319/1234 mit dem Titel «Gruppenantrieb SIMOVERT V mit Betriebs- und Hochfahrumrichter, Siemosyn-Motoren und speicherprogrammierbarer Steuerung SIMATIC S5-110», bekannt ist. Dort sind zwei Umrichter, ein Betriebsumrichter im Hauptnetz und ein Hochfahrumrichter im Hilfsnetz mit Bremssatz angeordnet. Über den Hochfahrumrichter wird der Motor frequenzgeführt bis zur Betriebsdrehzahl hochgefahren. Ist die Betriebsdrehzahl erreicht, synchronisiert der Hochfahrumrichter in Frequenz, Phasenlage und Spannung auf den Betriebsumrichter. Der freigewordene Hochfahrumrichter geht anschliessend in Wartestellung. Soll ein Motor stillgesetzt werden, so wird der Hochfahrumrichter auf die Betriebsfrequenz gefahren. Sind die Synchronisierungsbedingungen erfüllt, so übernimmt der Hochfahrumrichter den Motor vom Betriebsumrichter. Anschliessend wird der Motor mit definiertem Bremsmoment abgebremst.

Der Nachteil der vorstehend geschilderten Ausführungsart ist, dass jeweils immer nur ein Motor an den Hochfahrumrichter im Hilfsnetz angeschlossen werden kann.

Sind mehrere Motoren parallelgeschaltet, beispielsweise bei Offen-End-Spinnmaschinen, so benötigt die serielle Inbetriebnahme bzw. das Stillsetzen aller Motoren einen relativ langen Zeitraum.

Bei Ausfall des zentralen Hilfsnetzes wären die Motoren bei Stillsetzung der Anlage nicht abbremsbar und müssten frei auslaufen.

Ausserdem ist die vorstehend genannte Umschaltsteuerung vom Hilfs- aufs Hauptnetz und umgekehrt mit einer aufwendigen Verdrahtung verbunden.

Tritt ein Stör- oder Schadensfall an mehr als einer Maschine gleichzeitig auf, müsste bei vorstehend geschilderter Maschinensteuerung die gesamte Anlag ausser Betrieb gesetzt werden, was die Verfügbarkeit der Anlage nachteilig beeinflusst.

Aus der GB-A 2 109 020 ist ein Verfahren zur Steuerung von mehreren elektrischen Offen-End-Spinnmaschinen bekannt, bei dem eine Datenkommunikation zwischen einer zentralen Führungseinheit und einer, jeder elektrischen Maschine zugeordneten Steuereinrichtung stattfindet. Dabei erfolgt die Steuerung durch je einen Mikroprozessor, der von der zentralen Führungseinheit Steuerdaten erhält, wobei die Steuerdaten die Adresse der jeweils anzusprechenden Maschine beinhalten. Bei dieser Steuerung handelt es sich jedoch nicht um eine Antriebssteuerung, sondern um eine Überwachung der Maschinenfunktionen.

Die DE-B 1 271 815 betrifft eine Einrichtung zum Steuern und Speisen der Motoren einer Spinnmaschine zur Herstellung von synthetischen Fasern. Dabei wird jeder Motor durch einen ihm zugeordneten Wechselrichter gespeist, welcher seinerseits an eine Gleichstromsammelschiene angeschlossen ist. Eine Datenkommunikation zwischen den Motoren und einer zentralen Führungseinheit findet jedoch nicht statt.

Der Erfindung, wie sie in den Ansprüchen gekennzeichnet ist, liegt die Aufgabe zugrunde, ein Verfahren zum Antrieb von mehreren elektrischen Maschinen anzugeben, mit dem eine hohe Verfügbarkeit, ein guter Wirkungsgrad und eine grosse Flexibilität beim Steuern der elektrischen Maschinen mit einfachen Mitteln erreicht werden kann.

Ein Vorteil der Erfindung besteht darin, dass jede einzelne elektrische Maschine, welche gemeinsam mit einer Vielzahl elektrischer Maschinen von einer Gleichstromsammelschiene gespeist wird, von einer zentralen Führungseinheit aus und unabhängig von den übrigen Maschinen ansteuerbar ist.

Dieser autonome Zugriff zu jeder einzelnen elektrischen Maschine ermöglicht von einer zentralen Führungseinheit aus und bei minimalem Aufwand von Steuerungsverdrahtung:

- eine optimale Verfügbarkeit der von den elektrischen Maschinen getriebenen Anlage;
- eine grosse Flexibilität im Prozessablauf;
- eine grosse Anzahl von elektrischen Maschinen parallel zu betreiben;
- einen guten Wirkungsgrad;
- einen minimalen Leistungsverbrauch und
- eine einfache Bedienung.

Durch die Weiterbildung des Erfindungsgegenstandes gemäss Anspruch 2 kann die Hochfahr- und Bremscharakteristik autonom dem Rotordurchmesser jeder einzelnen elektrischen Maschine sowie dem Fertigungsprozess flexibel angepasst werden.

Die Lösung nach Anspruch 3 bietet den Vorteil, dass beim Offen-End-Spinnprozess die Drehzahl der einzelnen Spinnmotoren mit derjenigen des Hauptmotors der Offen-End-Spinnmaschine mit einfachen Mitteln synchronisiert werden kann.

Ein Vorteil des Verfahrens gemäss Anspruch 4 ist darin zu sehen, dass Spannungsschwankungen, welche von der Gleichstromsammelschiene herrühren, von der zentralen Führungseinheit kompensiert werden, und dadurch die Drehzahlkonstanz der Spinnmotoren erhalten bleibt.

Das Verfahren gemäss Anspruch 5 hat den Vorteil, dass Signale, welche aus dem Spinnprozess auf einfache Weise gewonnen werden, zur Steuerung der Betriebszustände der Spinnmotoren, insbesondere für deren Hochfahren bzw. Stillsetzen, herangezogen werden können.

Das im Anspruch 6 angegebene Verfahren ermöglicht eine Übermittlung von Signalen aus dem Spinnprozess an das zentrale Führungsorgan, wodurch der Spinnprozess besser überwacht werden kann. Ausserdem erlaubt der gegenseitige Datenaustausch zwischen dem zentralen Führungsorgan und einer übergeordneten Überwachungs- und Steuerungseinrichtung eine Optimierung des Prozesses einer Gesamtanlage auf einfache Weise.

Das sektionsweise Zusammenfassen der elektrischen Maschinen samt der ihnen zugeordneten Steuereinrichtung zu Spinnblöcken kann den Anforderungen von Verfahrensprozessen, welche unterschiedliche Hochfahrcharakteristiken notwendig machen, besser gerecht werden.

Die Erfindung wird nachstehend anhand von Ausführungsbeispielen erläutert. Es zeigen:

Fig. 1 ein Stoff- und Datenflussdiagramm eines Offen-End-Spinnprozesses in schematischer Darstellung;

Fig. 2 ein Übersichtsschaltbild eines dezentralen Mehrmotorenantriebssystems einer Offen-End-Spinnmaschine in schematischer Darstellung;

Fig. 3 ein Prinzipschaltbild eines dezentralen Mehrmotorenantriebssystems, bei dem mehrere Motoren einer gleichen Drehzahl sektionsweise zusammengefasst sind;

Fig. 4 ein Blockdiagramm einer zentralen Führungseinheit, welche in gegenseitiger Wirkverbindung mit den, jeder einzelnen elektrischen Maschine zugeordneten Mikroprozessoren, sowie mit einer übergeordneten Überwachungs- und Steuereinheit steht;

Fig. 5 ein Flussdiagramm der zentralen Führungseinheit, und

Fig. 6 ein Flussdiagramm eines, jeder einzelnen elektrischen Maschine zugeordneten Mikroprozessors.

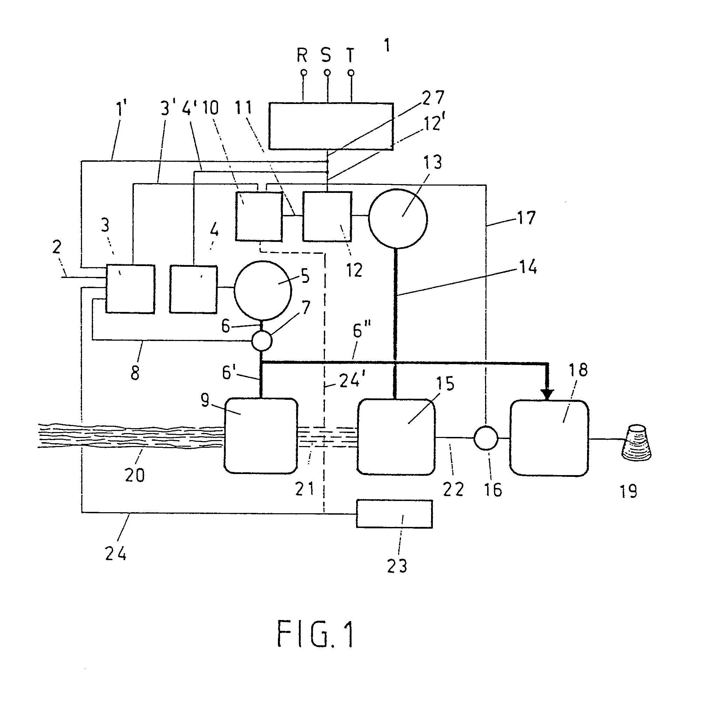

In Fig. 1 ist mit 1 ein zentraler Gleichrichter und dessen eingangsseitigen Pole mit R, S, T bezeichnet. Die zentrale Führungseinheit ist mit 3 und der dem Wechselrichter 12 des Spinnmotors 13 zugeordnete Mikroprozessor mit 10 bezeichnet. Ausgangsseitig ist der Gleichrichter 1 durch die Korrektursignalleitung 1' mit der zentralen Führungseinheit 3, durch die Stromzuleitung 4' mit dem Wechselrichter 4 des Hauptmotors 5 und durch die Stromzuleitung 12' mit dem Wechselrichter 12 des Spinnmotors 13 verbunden.

Die zentrale Führungseinheit 3 ist eingangsseitig mit einer Einstelldatenleitung 2, einer Drehzahlnennwertgebersignalleitung 8, sowie einer Hochfahrsignalleitung 24 verbunden. Ausgangsseitig steht die Führungseinheit 3 über einen Adressen-/Datenbus 3' mit dem Mikroprozessor 10 in Verbindung. Der Mikroprozessor 10 ist mittels der Bremssignalleitung 17 an einen Fadenwächter 16 und mittels der Hochfahrsignalleitung 24' an einen Anspinnwagen 23 angeschlossen.

Die Funktionsweise des Offen-End-Spinnprozesses soll im folgenden anhand von Fig. 1 näher erläutert werden: Der Hauptmotor 5 treibt einerseits die Welle 6' einer Einzieh- und Auflösevorrichtung 9 und andererseits die Welle 6" einer Abziehvorrichtung 18 an.

Durch die Einzieh- und Auflösevorrichtung 9 wird das Faserband 20 für den Spinnprozess vorbereitet und es verlässt die Vorrichtung 9 als aufgelöstes Faserband 21. Dieses tritt in die Spinnmaschine 15 ein, welche durch die Welle 14 des Spinnmotors 13 angetrieben wird. In der Spinnmaschine 15 wird das Garn 22 erzeugt, welches von der Abziehvorrichtung 18 aufgenommen und schliesslich zur Spule 19 aufgewickelt wird. Aus Gründen besserer Übersicht sind Spinnmotor 13 und Spinnmaschine 15 gemäss Fig. 1 getrennt dargestellt und mittels der Welle 14 verbunden. Spinnmotor 13 und Spinnmaschine 15 stellen jedoch eine mechanisch fest verbundene Einheit dar. Dabei ist die Spinnmaschine 15 als ein Spinntopf ausgebildet, welcher unmittelbar am Rotor des Spinnmotors 15 angeordnet ist.

Eine Drehzahlführungsgrösse, abgenommen vom Drehzahlnennwertgeber 7, welcher auf der Welle 6 des Hauptmotors 5 angeordnet ist, wird über die Drehzahlnennwertsignalleitung 8 in die zentrale Führungseinheit 3 eingegeben.

Über den Adressen-/Datenbus 3' werden von der Führungseinheit 3 modifizierte Steuersignale an den Mikroprozessor 10 gesendet, welche den Wechselrichter 12 des Spinnmotors 13 über die Signalleitung 11 steuern und somit die Drehzahl des Spinnmotors 13 den eventuell auftretenden Drehzahlschwankungen des Hauptmotors 5 nachführen, so dass die Erzeugung einer kontinuierlich guten Qualität des Garnes im gesamten Prozessablauf sichergestellt ist. Zustandsänderungen auf der zentralen Gleichstromsammelschiene 27, beispielsweise Spannungsschwankungen, kurzzeitig und überbrückbare Netzunterbrüche, welche die Drehzahlkonstanz des Spinnmotors 13 beeinflussen, werden durch die Korrektursignalleitung 1' auf die Führungseinheit 3 übertragen und dort überwacht. Bei Überschreiten vorgegebener Grenzwerte der Spannungsschwankungen wird ein Führungssignal über den Adressen-/Datenbus 3' von der Führungseinheit 3 an den Mikroprozessor 10 gesendet, um die Drehzahl des Spinnmotors 13 konstant zu halten oder um kurzzeitige Spannungsunterbrüche aufzufangen.

Der als Lichtschranke, Trennrelais oder berührungsloser Endschalter ausgebildete Fadenwächter 16 erteilt dem Mikroprozessor 10 über die Steuersignalleitung 17 die entsprechenden Steuerbefehle für das Hochfahren bzw. das Bremsen des Spinnmotors 13. Entsprechend dem vorgegebenen Frequenz-/Zeitverhalten läuft der Spinnmotor 13 in Abhängigkeit seines Rotordurchmessers auf Nenndrehzahl. Im Nennbetrieb wird die Drehzahl des Spinnmotors 13 den Drehzahlvariationen des Hauptmotors 5 in der Weise nachgeführt, wie es vorstehend eingehend beschrieben wurde. Tritt während des Spinnprozesses ein unvorhergesehener Bruch des Garnes 22 auf, so wird dies unverzüglich durch den Fadenwächter 16 detektiert, der dann entsprechende Steuerbefehle an den Mikroprozessor 10 über die Steuerleitung 17 erteilt, die ein sofortiges Stillsetzen des Spinnmotors 13 bewirken. Der Stillstand des Spinnmotors 13 wird über den Adressen-/ Datenbus 3' vom Mikroprozessor 10 an die Führungseinheit 3 signalisiert. Modifizierte Signale werden von der zentralen Führungseinheit 3 über die Hochfahrsignalleitung 24 einem Anspinnwagen 23 übermittelt, der den Spinnprozess wiederum einleitet. Durch den Fadenwächter 16, welcher den Unterbruch des Spinnprozesses, infolge Fadenbruches signalisiert und durch den Anspinnwagen 23, welcher die Wiederaufnahme des Spinnprozesses signalisiert, wird mittels einer bidirektionalen Wirkverbindung zwischen der Führungseinheit 3 und dem Mikroprozessor 10 über den Signalleitungen 3' und 17 eine selbsttätige Regelung des Spinnprozesses herbeigeführt. Da die Wirkungsweise des Anspinnwagens 23 nicht zum unmittelbaren Verständnis der Erfindung gehört, wird im weiteren nicht mehr darauf eingegangen.

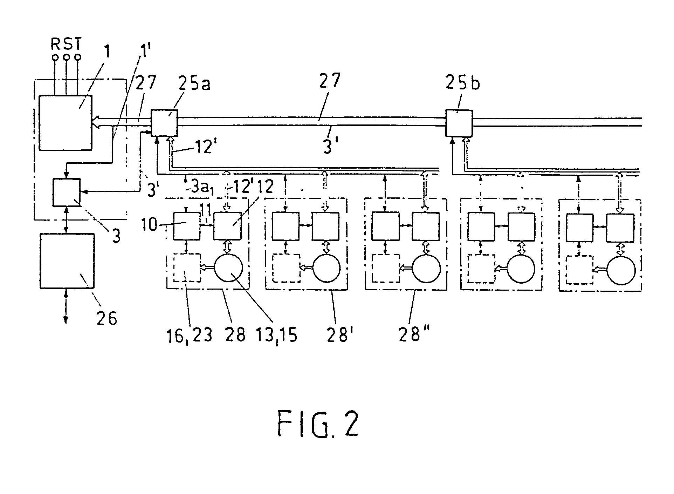

Fig. 2 zeigt ein Übersichtsschaltbild eines dezentralen Mehrmotorenantriebssystems einer Offen-End-Spinnmaschine. Gleiche Teile sind in dieser und den nachfolgenden Figuren mit der gleichen Bezugsziffer bezeichnet. In Fig. 2 sind in einer beispielsweisen Ausführungsform sektionsweise einmal drei Spinnblöcke 28, 28', 28'' und zum anderen zwei Spinnblöcke zusammengefasst. Beide Sektionen sind gemeinsam sowohl an die zentrale Gleichstromsammelschiene 27, als auch an den Adressen-/Datenbus 3' angeschlossen, wobei die erste Sektion an der Anpassstelle 25a, und die zweite Sektion an der Anpassstelle 25b an die Sammelschiene 27 bzw. an den Adressen-/Datenbus angeschlossen sind. Die Anpassstellen 25a, 25b dienen zur Verteilung der Speisespannung für die Motoren 13 in den Spinnblöcken 28, 28', 28'' und sind gleichzeitig Koppelglieder für den bidirektionalen Datenverkehr zwischen der zentralen Führungseinheit 3 und den autonom, jedem Spinnblock 28, 28', 28'' zugeordneten Mikroprozessor 10. Jeder Spinnblock 28, 28', 28'' umfasst je einen Mikroprozessor 10, je einen Wechselrichter 12, je einen Spinnmotor 13 mitsamt Spinnmaschine 15 und je einen Fadenwächter 16 und je Anspinnwagen 23.

Die Führungssignale von der zentralen Führungseinheit 3 werden über den Adressen-/Datenbus 3'; 3a; $3_{a1}$ an den jedem Spinnblock 28, 28', 28'' autonom zugeordneten Mikroprozessor 10 in Form eines seriellen Telegramms, welche aus Datenblöcken in vorgegebenem gleichen Aufbau und gleicher Länge bestehen, übertragen. Das Signalverteilsystem ist derart ausgelegt, dass ein 2-Richtungsverkehr möglich ist. Dies erlaubt Daten aus dem Prozess von jedem einzelnen Spinnmotor 13 mitsamt Spinnmaschine 15 von diesem ihm autonom zugeordneten Mikroprozessor 10 an die zentrale Führungseinheit 3 zu übermitteln. Die in der Führungseinheit 3 gespeicherten Daten können zu Überwachungs-, Steuer oder Registrierzwecken verwendet werden. Wie bereits erwähnt, erlaubt das erfindungsgemässe Signalverteilungssystem Befehle betreffend Hochfahren, Abbremsen oder Drehzahlnachführung gezielt an jedem einzelnen Spinnblock 28, 28', 28'' über adressierte Telegramme zu übermitteln. In Fig. 2 ist im Signalverteilungssystem durch die jeweils in zwei Richtungen weisenden Pfeile der Zwei-Richtungsdatenverkehr sinnbildlich verdeutlicht. Durch den Pfeil der Sammelschiene 27, welcher auf den Gleichrichter 1 hinweist, sowie durch die ebenfalls in zwei Richtungen weisenden Pfeile der Stromzuleitung 12' zum Wechselrichter 12, soll zum Ausdruck gebracht werden, dass die Spinnmotoren 13' in Ausnahmefällen und elektrische Energie an das Speisenetz zurückgeben.

Es versteht sich von selbst, dass die Sektionen – je nach Stärke des Speisenetzes – mehr als drei Spinnblöcke 28, 28', 28'' aufweisen können, als in Fig. 2 dargestellt ist.

Ebenso können – je nach Stärke des Speisenetzes – eine beliebige Anzahl von Sektionen der zentralen Sammelschiene 27, sowie dem Signalverteilungssystem 3; 3'; 3a; $3_{a1}$, 10 angegliedert sein.

Gemäss Fig. 2 sorgt eine übergeordnete Steuer- und Überwachungseinheit 26 dafür, dass mehrere Offen-End-Spinnmaschinen – von denen in Fig. 2 nur eine gezeigt ist – koordiniert und optimal gesteuert werden können.

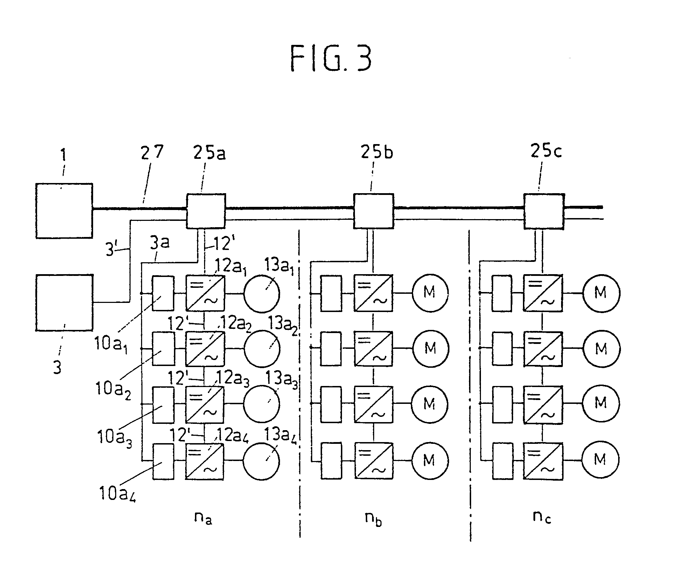

Fig. 3 zeigt ebenfalls ein Prinzipschaltbild eines dezentralen Mehrmotorenantriebs, wobei mehrere Motoren ebenfalls sektionsweise an den Abzweigstellen 25a, b, c an eine zentrale Sammelschiene 27 angeschlossen sind. Die Motoren $13_{a1}$–$13_{a4}$ der einzelnen Sektionen weisen unterschiedliche Drehzahlen $n_a$, $n_b$, $n_c$ auf und sie können mit einem gleichbleibenden Drehzahlverhältnis betrieben werden. Mit Hilfe der Einzelansteuerung durch die autonom jedem Wechselrichter $12_{a1}$–$12_{a4}$ der Motoren $13_{a1}$–$13_{a4}$ zugeordneten Mikroprozessoren $10_{a1}$–$10_{a4}$ ist es möglich, die Hochfahrdynamik der Motoren $13_{a1}$–$13_{a4}$ unterschiedlich zu gestalten. D. h., die Motoren $13_{a1}$–$13_{a4}$ können unabhängig voneinander über einen beliebig wählbaren Zeitraum vom Stillstand bis zur Nenndrehzahl hochgefahren werden. Dies wird, wie bereits erwähnt, erreicht, durch die Wirkverbindung zwischen der zentralen Führungseinheit 3 und den jeweiligen Mikroprozessoren $10_{a1}$–$10_{a4}$, indem Steuersignale über die Führungssignalleitungen 3'; 3a von der Führungseinheit 3 an die jeweiligen Mikroprozessoren erteilt werden. Die autonome Ansteuerung, welche vorstehend für die Motoren $10_{a1}$–$10_{a4}$ beschrieben wurde, gilt selbstverständlich auch für die anderen Sektionen mit den Abzweigstellen 25b und 25c, sowie für weitere, in Fig. 3 nicht dargestellte Sektionen.

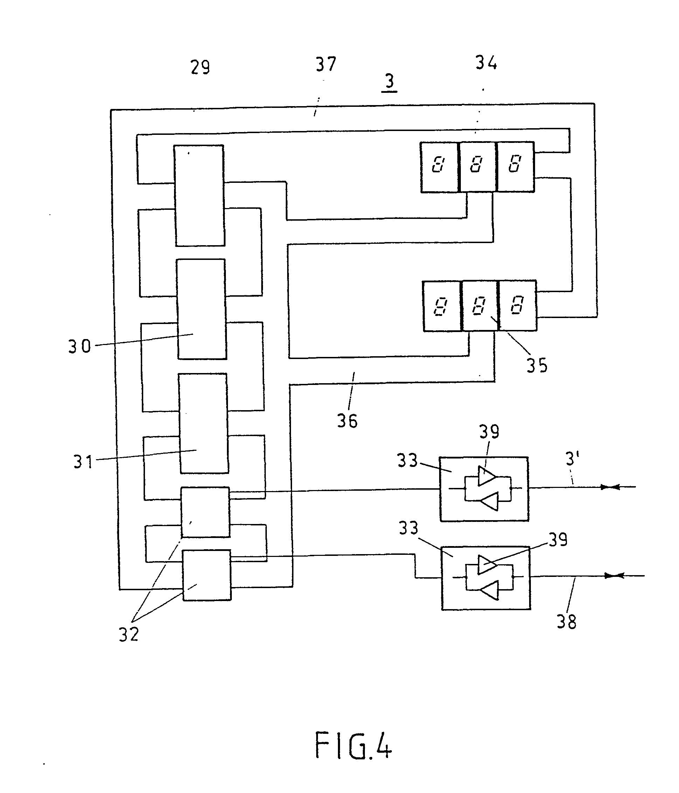

In Fig. 4 ist der prinzipielle Aufbau der zentralen Führungseinheit 3 ersichtlich. Mit 29 ist die «central process unit» bezeichnet, mit 30 der «read only memory»-Baustein, mit 31 der «random memory»-Baustein, mit 32 zwei universale «port»-Bausteine mit 33 «universal asynchron or printer» mit 35 «input-keyboard», mit 36 der Adressenbus und mit 37 der Datenbus.

Die Funktionsweise der zentralen Führungseinheit wird nachfolgend näher beschrieben:

In der «central process unit» vollzieht sich der Steuerungsablauf in der Führungseinheit 3, mit Hilfe des gespeicherten Betriebsprogrammes in «read only memory»-Baustein 30. Die «central process unit» generiert ein Adressen-/Datensignal und legt dieses auf den Adressenbus 36. Mit diesem Adressen-/Datensignal wird nur einer der Bausteine 30 oder 31 oder 32 oder 33 oder 34 oder 35 angesprochen. Mit dem adressierten Baustein 30 oder 31 oder 32 oder 33 oder 34 kann nunmehr die «central process unit» 29 Daten austauschen. Dies geschieht mittels des Datenbusses 37.

Daten, die über die Führungssignalleitung 3' im Zwei-Datenverkehr im «universal asynchron receiver and transmitter» 33 gesendet oder empfangen werden, werden im «random memory»-Baustein 31 zwischengespeichert. Darüber hinaus werden ebenfalls Daten über die Führungssignalleitung 38 im Zwei-Datenverkehr im «universal asynchron receiver and transmitter» 33' gesendet oder empfangen und gleichfalls im «random memory»-Baustein 31 zwischengespeichert. Im «universal asynchron receiver and transmitter» 33, 33' sind jeweils ein Sender 39 und ein Empfänger 40 angeordnet, mit denen Daten in serieller Form, asynchron gesendet bzw. empfangen werden können. Im input keyboard werden digital Daten eingegeben, die in der «central process unit» 29 aufgenommen, gespeichert und an einen der Bausteine 30 oder 31 oder 32 oder 33 oder 34 oder 35 weitergegeben werden. Über den Sender 39 des «universal asynchron receiver and transmitter» 33 werden die Daten zu den jedem einzelnen Motor 13; $13_{a1}$–$13_{a4}$ autonom zugeordneten Mikroprozessoren 10 weitergeleitet, dort ausgewertet und als Steuersignale den jeweiligen Wechselrichtern 12 zur Steuerung des Spinnmotors 13; $13_{a1}$–$13_{a4}$ und dem Fadenwächter 16 und/oder dem Anspinnwagen 23 zur Steuerung des Spinnprozesses zugeführt. Daten, die über die Führungssignalleitungen 3', 38 oder die über den «input keyboard» eingegeben werden, sind durch den «display or printer» anzeig- bzw. ausdruckbar.

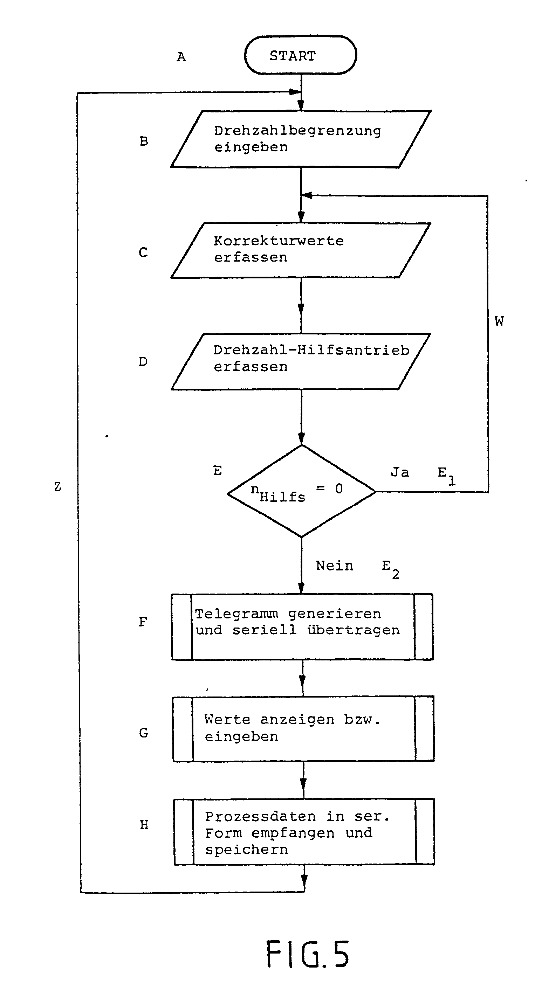

Fig. 5 veranschaulicht anhand eines Flussdiagrammes den Programmablauf innerhalb der zentralen Führungseinheit 3.

Mit A ist der Punkt im Ablaufschema bezeichnet, mit dem der Start des Programmes beginnt, nachdem alle Teile der Führungseinheit 3 automatisch auf ihre Funktionstüchtigkeit hin getestet und in die Ausgangslage gebracht worden sind.

In der Programmphase B wird die maximal zulässige Motordrehzahl der Spinnmotoren 13 in Abhängigkeit des Rotordurchmessers eingegeben.

In der Phase C werden eventuell auftretende Spannungsschwankungen der Gleichstromsammelschiene 1 über die Korrektursignalleitung 1' auf die Führungseinheit 3 übertragen und gespeichert.

In der Phase D werden eventuell auftretende Drehzahlschwankungen des Hauptmotors 5 durch den Drehzahlnennwertgeber 7 erfasst und über die Drehzahlnennwertsignalleitung 8 auf die Führungseinheit 3 übertragen und dort gespeichert.

In der Prüfphase E wird eine Entscheidung alternativ getroffen:

$E_1$: Ist die Drehzahl n des Hauptmotors 5 = 0, bleibt das Programm in der Warteschleife W und springt auf die Ausgangslage vor der Phase C zurück.

$E_2$: Ist die Drehzahl n des Hauptmotors vorhanden, werden die nachfolgenden Programmschritte ausgeführt.

In der Phase F werden in einem Unterprogramm aus nachfolgend aufgeführten, und in der Führungseinheit 3 modifizierten Daten Telegramme generiert und durch den Sender 39 des «universal asynchron receiver and transmitter» 33 der Führungseinheit 3 über den Adressen-/Datenbus 3' den Mikroprozessoren 10 der Motoren 13; $13_{a1}$–$13_{a4}$ seriell gesendet:
- Daten, herrührend aus Schwankungen der Gleichstromsammelschiene 1, die über die Korrektursignalleitung 1' der Führungseinheit 3 zugeführt werden,
- Daten über Drehzahlschwankungen des Hauptmotors 5, die durch den Drehzahlnennwertgeber 7 erfasst und über die Drehzahlnennwertsignalleitung 8 auf die Führungseinheit 3 übertragen werden.

Die Phase G erlaubt in einem Unterprogramm Daten, welche in Form eines seriellen Telegrammes von den Mikroprozessoren empfangen werden in die Führungseinheit 3 einzugeben. Diese Daten werden aus dem Spinnprozess durch den Fadenwächter 16 und den Anspinnwagen 23 gewonnen und im «display or printer» angezeigt.

In der Phase H werden Daten, die von den Einzelwechselrichtern 12 der elektrischen Maschine 13; $13_{a1}$–$13_{a4}$ an die zentrale Führungseinheit 3 gesendet werden, in der «central process unit» 29 der Führungseinheit 3 gespeichert und an die übergeordnete Gesamtanlagenführungseinheit 26 weitergeleitet.

Nach Durchlauf der Programmphasen B bis H wird der Programmablauf automatisch gemäss Bezugsziffer Z zur Ausgangslage zurückgeführt.

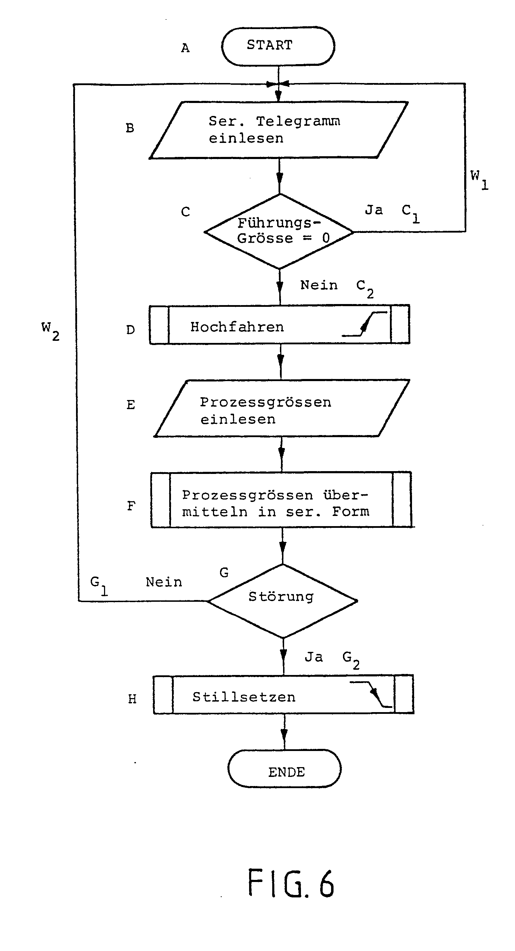

Fig. 6 veranschaulicht anhand eines Flussdiagrammes den Programmablauf innerhalb des Mikroprozessors 10.

Mit A ist der Punkt im Ablaufschema bezeichnet, mit dem der Start des Programms beginnt, nachdem alle Teile des Mikroprozessors 10 automatisch auf ihre Funktionstüchtigkeit hin getestet und in die Ausgangslage gebracht worden sind.

In der Phase B werden die von der Führungseinheit 3 seriell ankommenden Telegramme gelesen und gespeichert.

In der Prüfphase C wird eine Entscheidung alternativ getroffen:

$C_1$: Werden keine Signale empfangen, bleibt das Programm in der Warteschleife $W_1$ und springt in

die Ausgangslage vor der Phase B zurück.

$C_2$: Es werden Signale empfangen.

In der Phase D werden Hochfahrsignale generiert, die die Motoren 13; $13_{a1}$–$13_{a4}$ auf Nenndrehzahl bringen.

In der Phase E werden Prozessgrössen, die vom Fadenwächter 16 und/oder vom Anspinnwagen 23 gewonnen werden, eingelesen und gespeichert.

In der Phase F werden die in Phase E gewonnenen Grössen in serieller Form an die zentrale Führungseinheit 3 zurückgesendet.

In der Prüfphase G wird eine Entscheidung alternativ getroffen:

$G_1$: Der Prozess verläuft normal, das Programm springt über die Warteschleife $W_2$ in die Ausgangslage vor der Phase B zurück.

$G_2$: Es liegt eine Prozessstörung, beispielsweise infolge Fadenbruches vor.

In der Phase H wird der Motor 13, $13_{a1}$–$13_{a4}$ abgebremst und der Spinnprozess wird beendet.

## Patentansprüche

1. Verfahren zur Antriebssteuerung von mehreren elektrischen Maschinen (13; $13_{a1}$ bis $13_{a4}$), insbesondere von Offen-End-Spinnmaschinen, bei dem eine Datenkommunikation zwischen einer zentralen Führungseinheit (3) und einer, jeder elektrischen Maschine (13; $13_{a1}$ bis $13_{a4}$) zugeordneten Steuereinrichtung stattfindet, dadurch gekennzeichnet, dass jede elektrische Maschine (13; $13_{a1}$ bis $13_{a4}$) durch einen ihr zugeordneten Wechselrichter (12) gespeist wird, welcher seinerseits an eine Gleichstromsammelschiene (27) angeschlossen ist, dass die Steuerung der Wechselrichter (12) durch je einen jeder Steuereinrichtung zugeordneten Mikroprozessor (10) erfolgt, der von der zentralen Führungseinheit (3) Steuerdaten erhält, wobei die Steuerdaten zumindest die Adresse der jeweils anzusprechenden elektrischen Maschine (13; $13_{a1}$ bis $13_{a4}$), die Soll-Speisespannung der jeweils anzusprechenden elektrischen Maschine (13; $13_{a1}$ bis $13_{a4}$) und die Drehzahl der jeweils anzusprechenden Maschine (13; $13_{a1}$ bis $13_{a4}$) enthalten.

2. Verfahren nach Anspruch 1, dadurch gekennzeichnet, dass das Anfahren und Stillsetzen der elektrischen Maschine (13; $13_{a1}$ bis $13_{a4}$) durch den Mikroprozessor (10) gesteuert wird, der autonom jeder elektrischen Maschine ($13_{a1}$ bis $13_{a4}$) zugeordnet ist.

3. Verfahren nach Anspruch 1 oder 2 zum Antrieb von Offen-End-Spinnmaschinen, dadurch gekennzeichnet, dass die zentrale Führungseinheit (3) von einem Drehzahlnennwertgeber (7) Signale erhält, die von einer Welle (6) eines Hauptmotors (5) abgeleitet sind, welcher Hauptmotor (5) eine Einzieh- und Auflösevorrichtung (9), sowie eine Abziehvorrichtung (18) antreibt, dass diese Signale an den, einem jeden Spinnmotor (13) mitsamt Spinnmaschine (15) zugeordneten Mikroprozessor (10) seriell übertragen werden, und dass mittels der Wirkverbindung zwischen der zentralen Führungseinheit (3) und dem Mikroprozessor (10) die Drehzahl jedes Spinnmotors (13) den Drehzahlvariationen des Hauptmotors (5) nachgeführt wird, und dadurch die Drehzahl des Spinnmotors (13) mitsamt Spinnmaschine (15) und diejenige der Welle (6) des Hauptmotors (5) synchronisiert werden.

4. Verfahren nach Anspruch 1, 2 oder 3, dadurch gekennzeichnet, dass die zentrale Führungseinheit (3) Signale über Spannungsschwankungen der Gleichstromsammelschiene (27) über eine Korrektursignalleitung (1') empfängt, dass diese Signale an den, einem jeden Spinnmotor (13) mitsamt Spinnmaschine (15) zugeordneten Mikroprozessor (10) seriell übertragen werden, und dass durch die Wirkverbindung zwischen der zentralen Führungseinheit (3) und Mikroprozessor (10) die Speisespannung jedes Spinnmotors (13) und dadurch die Drehzahl des Spinnmotors (13) mitsamt Spinnmaschine (15) konstant gehalten wird.

5. Verfahren nach Anspruch 3 oder 4, dadurch gekennzeichnet, dass die autonome Steuerung der Spinnmotoren (13) zusätzlich in Abhängigkeit von Signalen durch als Mess- und Überwachungsglied ausgebildete Fadenwächter (16) und Anspinnwagen (23) erfolgt, welche Signale aus dem Spinnprozess gewonnen und an den Mikroprozessor (10) übermittelt werden, und die eine direkte Einflussnahme auf den Spinnprozess, insbesondere beim Hochfahren bzw. Stillsetzen der Spinnmotoren (13), erlauben.

6. Verfahren nach Anspruch 3 und 4, dadurch gekennzeichnet, dass von jedem autonom dem Spinnmotor (13) zugeordneten Mikroprozessor (10) Daten aus dem Spinnprozess an die zentrale Führungseinheit (3) übermittelt und gespeichert werden, wodurch der Spinnprozess jedes Spinnmotors (13) überwacht wird, und dass die zentrale Führungseinheit (3) in gegenseitigem Datenaustausch mit einer übergeordneten Überwachungs- und Steuerungseinrichtung (26) zur Optimierung des Prozesses einer Gesamtanlage steht.

7. Verfahren nach einem der Ansprüche 1 bis 6, dadurch gekennzeichnet, dass mindestens zwei elektrische Maschinen samt den ihnen zugeordneten Steuereinrichtungen (10, 11) sektionsweise zu Spinnblöcken zusammengefasst sind und über bidirektionale Abzweigstellen (25a, 25b, 25c) sowohl an die zentrale Gleichstromsammelschiene (27) als auch an die zentrale Führungseinheit (3) angeschlossen sind.

## Claims

1. Method for controlling the drive of a plurality of electrical machines (13; $13_{a1}$ to $13_{a4}$), in particular of open-end spinning frames, in which data communication takes place between a central control unit (3) and a control device associated with each electrical machine (13; $13_{a1}$ to $13_{a4}$), characterized in that each electrical machine (13; $13_{a1}$ to $13_{a4}$) is fed by an inverter (12) associated therewith, which in turn is connected to a direct current busbar (27), in that the inverters (12) are controlled in each case by one microprocessor (10) associated with each control device and which receives control data from the central control unit (3), the control data being at least the address of the electrical machine (13; $13_{a1}$ to $13_{a4}$) to be addressed in each case, the nominal supply voltage of the electrical machine (13; $13_{a1}$ to $13_{a4}$) to be addressed in each case and the speed of the machine (13; $13_{a1}$ to $13_{a4}$) to be addressed in each case.

2. Method according to Claim 1, characterized in that the starting-up and halting of the electrical machine (13; $13_{a1}$ to $13_{a4}$) is controlled by the microprocessor (10) which is associated autonomously with each electrical machine ($13_{a1}$ to $13_{a4}$).

3. Method according to Claim 1 or 2 for driving open-end-spinning frames, characterized in that the central control unit (3) receives from a nominal speed generator (7) signals which are derived from a shaft (6) of a main motor (5), which main motor (5) drives a drawing-in and separating device (9) as well as a drawing-off device (18), in that these signals are serially transmitted to the microprocessor (10) associated with wach spinning-frame motor (13) together with the spinning frame (15), and in that by means of the interaction between the central control unit (3) and the microprocessor (10), the speed of each spinning-frame motor (13) is compensated for the speed variations of the main motor (5), and consequently the speed of the spinning-frame motor (13) together with the spinning frame (15) and that of the shaft (6) of the main motor (5) are synchronized.

4. Method according to Claim 1, 2 or 3, characterized in that the central control unit (3) receives signals about voltage fluctuations of the direct current busbar (27) via a correction signal line (1'), in that said signals are serially transmitted to the microprocessor (10) associated with each spinning-frame motor (13) together with the spinning frame (15), and in that as a result of the interaction between the central control unit (3) and microprocessor (10), the supply voltage of each spinning frame (13) and consequently the speed of the spinning-frame motor (13) together with the spinning frame (15) are kept constant.

5. Method according to Claim 3 or 4, characterized in that the autonomous control of the spinning-frame motors (13) is additionally effected as a function of signals by means of thread regulators (16) designed as a measuring and monitoring element and joining carriage (23), which signals are obtained from the spinning process and transmitted to the microprocessor (10), and which permit a direct influencing of the spinning process, in particular during starting or halting of the spinning-frame motors (13).

6. Method according to Claim 3 and 4, characterized in that data from the spinning process is transmitted by each microprocessor (10) associated autonomously with the spinning-frame motor (13) to the central control unit (3) and stored, as a result of which the spinning process of each spinning-frame motor (13) is monitored, and in that the central control unit (3) mutually exchanges data with a superordinate monitoring and control device (26) for optimizing the process of an overall system.

7. Method according to one of Claims 1 to 6, characterized in that at least two electrical machines together with the control devices (10, 11) associated therewith are combined in sections to form spinning blocks and are connected via bidirectional branching points (25a, 25b, 25c) both to the central direct current busbar (27) and to the central control unit (3).

## Revendications

1. Procédé de commande d'entraînement de plusieurs machines électriques (13; $13_{a1}$ à $13_{a4}$), en particulier de métiers à filer à fibres libérées, dans lequel une communication de données a lieu entre une unité centrale de conduite (3) et un dispositif de commande associé à chaque machine électrique (13; $13_{a1}$ à $13_{a4}$), caractérisé en ce que chaque machine électrique (13; $13_{a1}$ à $13_{a4}$) est alimentée par un onduleur (12) associé qui, pour sa part, est connecté à une barre omnibus CC (27), que la commande de l'onduleur (12) est assurée par un microprocesseur (10) associé à chaque dispositif de commande, qui reçoit des données de commande de l'unité centrale de conduite (3), ces données de commande contenant au moins l'adresse de la machine électrique respective à actionner (13; $13_{a1}$ à $13_{a4}$), la tension d'alimentation de consigne de la machine électrique respective à actionner (13; $13_{a1}$ à $13_{a4}$) et la vitesse de rotation de la machine respective à actionner (13; $13_{a1}$ à $13_{a4}$).

2. Procédé suivant la revendication 1, caractérisé en ce que la mise en marche et l'arrêt de la machine électrique (13; $13_{a1}$ à $13_{a4}$) sont commandés par le microprocesseur (10) qui est associé de manière autonome à chaque machine électrique (13; $13_{a1}$ à $13_{a4}$).

3. Procédé suivant la revendication 1 ou 2, pour l'entraînement de métiers à filer à fibres libérées, caractérisé en ce que l'unité centrale de conduite (3) reçoit d'un transmetteur tachymétrique nominal (7) des signaux qui sont dérivés d'un arbre (6) d'un moteur principal (5), ce moteur principal (5) entraînant un dispositif d'alimentation et d'ouvraison (9) ainsi qu'un dispositif d'évacuation (18), que ces signaux sont transmis en série au microprocesseur (10) associé à chaque moteur de filature (13) avec métier à filer (15), et qu'au moyen de la liaison active entre l'unité de conduite centrale (3) et le microprocesseur (10), la vitesse de rotation de chaque moteur de filature (13) est asservie aux variations de vitesse de rotation du moteur principal (5) et de cette façon la vitesse de rotation du moteur de filature (13) avec métier à filer (15) et celle de l'arbre (6) du moteur principal (5) sont synchronisées.

4. Procédé suivant la revendication 1, 2 ou 3, caractérisé en ce que l'unité centrale de conduite (3) reçoit, par l'intermédiaire d'une ligne de signaux de correction (1'), des signaux portant sur les variations de tension de la barre omnibus CC (27), que ces signaux sont transmis en série au microprocesseur (10) associé à chaque moteur de filature (13) avec métier à filer (15) et que, grâce à la liaison active entre l'unité centrale de conduite (3) et le microprocesseur (10), la tension d'alimentation de chaque moteur de filature (13) et, de cette façon la vitesse de rotation du moteur de filature (13) avec métier à filer (15), sont maintenus constants.

5. Procédé suivant la revendication 3 ou 4, caractérisé en ce que la commande autonome des moteurs de filature (13) s'effectue, en outre, en fonction de signaux produits par un casse-fil (16) et un rattacheur (23) formant un élément de mesure et de surveillance, ces signaux provenant du processus de filature, étant transmis au microprocesseur (10) et permettant d'influencer directement le processus de filature, en particulier lors de l'accélération ou de l'arrêt des moteurs de filature (13).

6. Procédé suivant les revendications 3 et 4, caractérisé en ce que des données provenant du processus de filature sont transmises à l'unité centrale de conduite (3) par chaque microprocesseur (10) associé de manière autonome au moteur de filature (13) et sont stockées dans le but de surveiller le processus de filature de chaque moteur de filature (13), et que l'unité centrale de conduite (3) effectue des échanges de données réciproques avec un dispositif de surveillance et de commande maître (26) pour optimiser le processus d'une installation globale.

7. Procédé suivant l'une quelconque des revendications 1 à 6, caractérisé en ce qu'au moins deux machines électriques avec les dispositifs de commande (10, 11) qui y sont associés sont groupés par sections en blocs de filature et sont connectées, par l'intermédiaire de points de dérivation bidirectionnels (25a, 26b, 25c), à la fois à la barre omnibus CC centrale (27) et à l'unité centrale de conduite (3).

FIG. 1

FIG. 2

# FIG. 3

FIG.4

START

A

B  Drehzahlbegrenzung
   eingeben

C  Korrekturwerte
   erfassen

D  Drehzahl-Hilfsantrieb
   erfassen

W

Z

E  $n_{Hilfs} = 0$  Ja  $E_1$

Nein  $E_2$

F  Telegramm generieren
   und seriell übertragen

G  Werte anzeigen bzw.
   eingeben

H  Prozessdaten in ser.
   Form empfangen und
   speichern

FIG.5

17

FIG. 6